# EUROPEAN PATENT APPLICATION

(11) **EP 3 093 524 A1**
(43) Date of publication of application: **16.11.2016**
(21) Application number: 16156211.1
(22) Date of filing: 17.02.2016
(51) Int. Cl.: F16F 15/32

(54) **SHAFT BALANCING SYSTEM AND METHOD OF BALANCING A SHAFT**

(30) Priority: 30.04.2015 US 201514700371
(71) Applicant: ArvinMeritor Technology, LLC, Troy, MI 48084 (US)
(72) Inventor: Zhai, Yang, Rochester Hills, MI Michigan 48307 (US); Leicht, Phillip, South Lyon, MI Michigan 47178 (US)
(74) Representative: Jones, John Bryn

(57) **Abstract**

A method and a system (10) of balancing a shaft (20) for an axle assembly. The method may include depositing a powder composition (60) onto the shaft (20) to produce a balance weight proximate an imbalance location (52). The powder composition (60) may be propelled by a heated supersonic gas (76) and may plastically deform and mechanically interlock to the shaft (20).

## Description

### TECHNICAL FIELD

The present disclosure relates to a method of balancing a shaft and a shaft balancing system.

### BACKGROUND

An apparatus for gas-dynamic coating is disclosed in U.S. Patent No. 6,402,050.

### SUMMARY

In at least one embodiment, a method of balancing a shaft for an axle assembly is provided. The method may include rotating the shaft about an axis and locating an imbalance location of the shaft while the shaft is rotating. Rotation of the shaft may be stopped such that the imbalance location is located directly above the axis. A powder deposition device may be positioned above the imbalance location. A powder composition may be deposited onto the shaft with the powder deposition device to produce a balance weight proximate the imbalance location. The powder composition may be propelled by a heated supersonic gas and the powder composition may plastically deform and bond to the shaft.

In at least one embodiment, a method of balancing a shaft for an axle assembly is provided. The method may include rotating the shaft about an axis and locating an imbalance location of the shaft while the shaft is rotating. Rotation of the shaft may be stopped such that the imbalance location may be located directly above the axis. A powder deposition device may be positioned above the imbalance location. A powder composition may be deposited onto the shaft with the power deposition device to produce a balance weight proximate the imbalance location. The balance weight may extend along a balance weight axis. The powder composition may be deposited with the powder deposition device by rotating the powder deposition device about the balance weight axis and with respect to the shaft. The powder composition may be propelled by a heated supersonic gas and the powder composition may plastically deform and bond to the shaft.

In at least one embodiment, a shaft balancing system is provided. The shaft balancing system may include a dynamic balancer that may rotate a shaft about an axis and determine an imbalance location of the shaft. The shaft balancing system may further include a powder deposition device that may deposit a powder composition onto the shaft to produce a balance weight on the shaft proximate the imbalance location. The powder deposition device may be located directly above the axis and the dynamic balancer may hold the shaft in a stationary position when the powder composition is deposited.

### BRIEF DESCRIPTION OF THE DRAWINGS

- Figure 1: is a perspective view of an exemplary shaft balancing system.
- Figure 2: is a flowchart of a method of balancing a shaft for an axle assembly.
- Figure 3: is a side view of a shaft having a balance weight.
- Figure 4: is a side view of a shaft having another example of a balance weight.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

Axle assembly components are generally coupled together and may rotate at different speeds to transmit driving torque from a propulsion source to a wheel assembly. The complexities of the axle assembly components may require precise balancing of axle components, such as drive shafts, axle shafts, wheel assemblies, brake drums, wheel hubs, etc. A dynamic imbalance of at least one component of an axle assembly may result in driveline disturbances or vibrations that may increase part wear or decrease service life.

Axle assembly components are typically dynamically balanced in a single or multiple planes. Dynamic balancing may involve rotating an axle assembly component at a predetermined speed and measuring an amount of imbalance. The amount of imbalance may be compared to an imbalance tolerance. The imbalance tolerance may be established separately for each axle component or may be combined into a single axle assembly level tolerance. The imbalance of the axle assembly component may be corrected to be within the imbalance tolerance by the mechanical addition of discrete weights or the removal of material and weight from the axle assembly component. Discrete weights may be fixedly disposed on an external surface of the axle assembly component by resistance welding.

The addition of discrete weights to correct the amount of imbalance may limit the precision and accuracy of the balancing process since discrete weights may be provided with a predetermined mass, e.g., 5 grams or 10 grams. The addition of the predetermined mass may adversely affect the correction of the imbalance due to the lack of flexibility in a mass selection. Multiple predetermined masses may be added to the axle assembly component until the imbalance becomes within the imbalance tolerance, but may result in an amount of imbalance that may be close to a tolerance limit, which may lead to exceeding the tolerance limit if mass, such as mass from contaminants, are added during use. Also it is not recommended that the discrete weights be stacked or co-located on top of each other to balance the axle assembly component because of the reduced weld effectiveness through multiple discrete weights. Furthermore, axle assembly components made of high strength cast irons like gray cast iron, ductile cast iron, nodular cast iron, and compacted graphite iron may not be suitable for adding mass via welding since the carbon and silicon content of the cast iron may impact the weldability of the discrete weight to the axle assembly component or may damage or degrade the cast iron.

A possible solution to obviate the challenges presented in dynamically balancing axle assembly components made of high-strength cast iron or high-strength cast steel using predetermined discrete weights may be to form a balance weight directly on a surface of the axle component. The formed balance weight may be provided in variable increments based on the amount of imbalance detected.

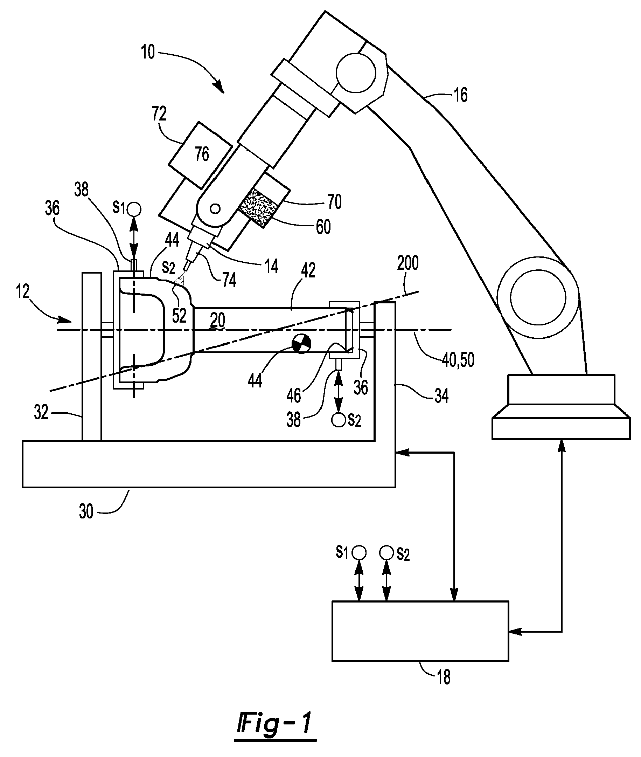

Referring to Figure 1, a shaft balancing system 10 is shown. The shaft balancing system 10 may include a dynamic balancer 12, a powder metal deposition device 14, and a robotic manipulator 16, and a control system 18.

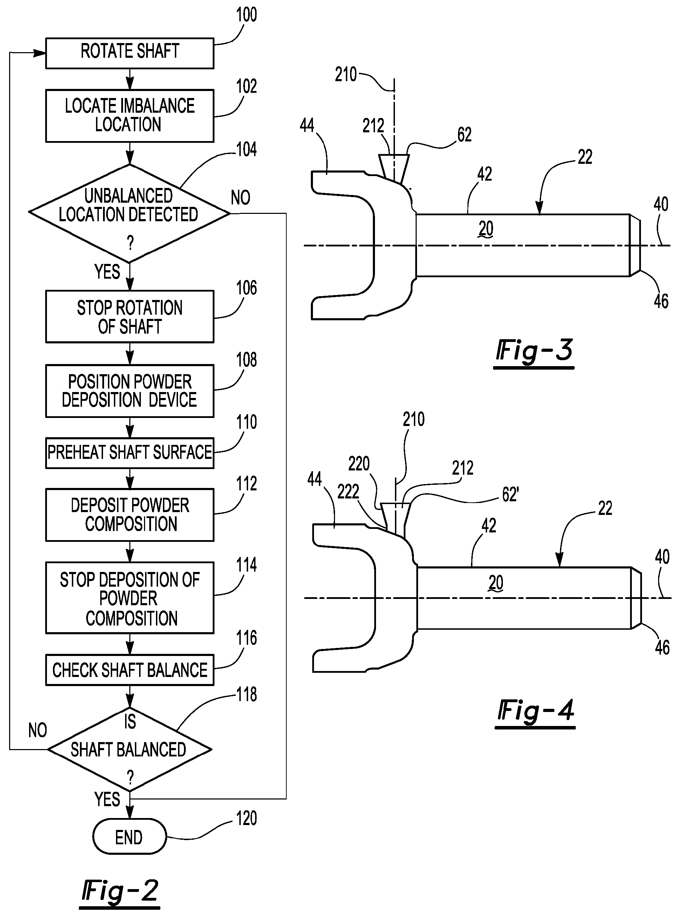

The dynamic balancer 12 may be a single plane or multi-plane dynamic balancer that may locate at least one imbalance location on an axle component, such as a shaft 20 for an axle assembly 22, which is represented in Figures 3 and 4. The dynamic balancer 12 may have a base 30, a first support 32, a second support 34, a drive mechanism 36, and an imbalance sensor 38.

The shaft 20 may extend along an axis 40 and may have an exterior surface 42. The exterior surface 42 may be an exterior circumference of the shaft 20. In at least one embodiment, the exterior surface may face away from the axis 40 or may face toward the axis 40, such as in a hollow shaft or shaft having a hole. The shaft 20 may have a first end 44 and a second end 46 that may be disposed opposite the first end 44. In at least one embodiment, the shaft 20 may be an input shaft of an axle assembly.

The base 30 may support components of the dynamic balancer 12. For example, the base 30 may support the first support 32 and the second support 34.

The first support 32 may extend from the base 30 and may rotatably support the first end 44 of the shaft 20. The first support 32 may define a first correction plane. The first support 32 may be spaced apart from the second support 34.

The second support 34 may extend from the base 30 and may rotatably support the second end 46 of the shaft 20. The second support 34 may define a second correction plane.

The drive mechanism 36 may rotate the shaft 20 about an axis of rotation 50. For example, the drive mechanism 36 may be provided with the first support 32 and/or the second support 34 in one or more embodiments. The axis of rotation 50 may be coincident with the axis 40 of the shaft 20 when the shaft 20 is received in the dynamic balancer 12.

The imbalance sensor 38 may be disposed proximate the first support 32 and/or the second support 34. The imbalance sensor 38 may detect or provide data indicative of imbalance of the shaft 20. The imbalance sensor 38 may be of any suitable type. For example, the imbalance sensor 38 may be configured as an accelerometer, a vibration sensor, or the like and may detect acceleration, vibration, noise or harmonics in a manner known by those skilled in the art. Data from the imbalance sensor 38 may also be used by the control system 18 to determine an imbalance location 52 of the shaft 20. An imbalance location 52 may be a location where there is insufficient mass to provide even distribution of the center of mass of the shaft 20 with respect to the axis of rotation 50. As such, an imbalance location 52 may exist when the center of mass of the shaft or part to be balanced is not aligned with the axis of rotation 50 or geometric axis of the shaft 20. The imbalance location 52 may be located on an exterior or interior surface of the shaft 20 and may be a location where a balance weight or mass may be added to the shaft to correct the dynamic balance of the shaft 20.

The powder metal deposition device 14 may deposit a powder composition 60 onto the shaft 20 to produce a balance weight 62. The balance weight 62 may be deposited on the shaft 20 proximate the imbalance location 52 as will be discussed in more detail below. The powder metal deposition device 14 may include a container 70, a compressed gas source 72, and a nozzle 74.

The powder composition 60 and balance weight 62 may be formed of a material that may differ from a material from which the shaft 20 is made. For example, the powder composition 60 may be a powder composition comprising metal, glass, ceramic, polymer, or combinations thereof. In at least one embodiment, the powder composition 60 may be a nickel-based composition. Exemplary nickel-based powder compositions by weight percentage may include 92.0-99.7% nickel, with the remainder being aluminum and/or ceramics. The nickel-based powder composition may have a melting point of approximately 1390-1455 °C. The ceramics and/or aluminum may act to increase the density of the powder composition 60 to improve the deposition efficiency of the powder composition 60 onto a surface of the shaft 20. The mean particle size of the powder composition 60 may be approximately 1 µm to 15 µm. In at least one embodiment, the powder composition 60 may be a copper, aluminum, magnesium, steel, iron, or zinc based composition. The powder composition 60 may also be a powder composition having a glass, ceramic, or other non-metallic material based composition.

The container 70 may receive the powder composition 60. The container 70 may be disposed on the robotic manipulator 16 in one or more embodiments.

The compressed gas source 72 may provide a pressurized or compressed carrier gas 76 that may propel or transport the powder composition 60 onto the shaft 20. The compressed carrier gas 76 may be a compressed gas or compressed gas mixture, such as air, nitrogen, or helium. The compressed carrier gas 76 may be heated with a heater or heating element. For example, the compressed carrier gas 76 may be heated to a temperature of approximately 175°C to 540°C. The heating element may be configured to heat the compressed carrier gas 76 before the powder composition 60 is fed into the compressed carrier gas 76. In at least one embodiment, the heating element may be configured to heat the combination of the compressed carrier gas 76 and the powder composition 60 prior to entry into the nozzle 74.

The nozzle 74 may be provided downstream of the container 70 and the compressed gas source 72. The nozzle 74 may be of any suitable type, such as a converging-diverging nozzle which may also be referred to as a DeLaval nozzle. The nozzle 74 may accelerate the compressed carrier gas 76 to supersonic velocities of approximately Mach 2-4 such that the compressed carrier gas 76 may exit the nozzle 74 as a supersonic gas. The supersonic velocity of the compressed carrier gas 76 may propel the powder composition 60 to particle velocities of approximately 200 m/s to 900 m/s. The nozzle 74 may also propel the powder composition 60 such that the particle speed of the powder composition 60 exceeds a critical velocity. The critical velocity may be based on the mean particle size of the powder composition 60, the nozzle exit diameter, the nozzle throat diameter, and the temperature and pressure of the compressed carrier gas 76. The critical velocity may be a velocity at which the powder composition 60 may successfully attach to the shaft 20 or powder composition 60 that has been previously deposited. The critical velocity may allow the powder composition 60 to be deposited on the shaft 20 at an impact pressure of approximately 150-250 psi. Should the critical velocity not be achieved, the powder composition 60 may not attach to the exterior surface 42 of the shaft 20 and/or previously deposited powder composition 60.

The powder composition 60 may be deposited using a solid-state spraying process in which the particles of the powder composition 60 may be propelled as solid particles by powder metal deposition device 14. The solid-state spraying process may be a cold gas dynamic spraying process such as a high pressure gas dynamic spraying process, low pressure gas dynamic spraying process, or pulsed cold gas dynamic spraying process. A high pressure gas dynamic spraying process may use a compressed carrier gas 76 at a pressure of approximately 340 psi to 600 psi. A low pressure gas dynamic spraying process may use a compressed carrier gas 76 at a pressure of approximately 70 psi to 145 psi. A pulsed cold gas dynamic spraying process may provide pulsed delivery of the compressed carrier gas 76 such that gas shockwaves may aid in the propulsion of the powder composition 60 toward the shaft 20.

A cold gas dynamic spraying process may be performed at a temperature less than a melting point of the powder composition 60 and at a temperature that may be less than the melting point of the exterior surface 42 of the shaft 20 upon which the powder composition may be deposited. The surface temperature of the shaft 20 may increase by no more than 200°C as the powder composition 60 is deposited onto the shaft 20 during the cold gas dynamic spraying process.

The cold gas dynamic spraying process may present various advantages as compared to thermal bonding processes performed at higher temperatures. A cold gas dynamic spraying process may inhibit metallurgical transformations such as phase changes or grain growth of the shaft 20 in response to deposition of the powder composition 60. In addition, a heat affected zone may not develop on the shaft 20 and the shaft 20 may not undergo meaningful thermally induced distortion. Additionally, the exterior surface 42 of the shaft 20 may be strain hardened by the deposition of the powder composition 60 onto the exterior surface 42 of the shaft 20.

The powder composition 60 propelled by the compressed carrier gas 76 may initially impact and engage the exterior surface 42 of the shaft 20 and may mechanically attach to the exterior surface 42 of the shaft 20 without melting. The powder composition 60 may be securely affixed to the exterior surface 42 of the shaft 20 similar to fastening. Moreover, the particles of the powder composition 60 as well as the shaft 20 may plastically deform due to the high velocity impact and the particles of the powder composition 60 may mechanically interlock with the exterior surface 42 of the shaft 20. Particles of the powder composition 60 that are deposited on previously deposited particles may plastically deform and interlock with each other and may compact the previously deposited particles.

The robotic manipulator 16 may support and position the powder metal deposition device 14. For example, the robotic manipulator may be configured as a multi-axis robotic manipulator with multiple degrees of freedom in one or more embodiments. It is also contemplated that the robotic manipulator 16 may be omitted in one or more embodiments. For example, the powder metal deposition device 14 may be configured to be handheld and positioned by an operator.

The control system 18 may include one or more controllers or control modules and may monitor and control various components of the shaft balancing system 10. For example, the control system 18 may be electrically connected to or may communicate with components of the shaft balancing system 10, such as the powder metal deposition device 14, the robotic manipulator 16, the drive mechanism 36, and the imbalance sensor 38. Communication between the control system 18 and the imbalance sensor 38 may be represented by connection node S1 in Figure 1.

Referring to Figure 2, a flowchart of an exemplary method of balancing a shaft 20 for an axle assembly is shown. As will be appreciated by one of ordinary skill in the art, the flowcharts may represent control logic which may be implemented or affected in hardware, software, or a combination of hardware and software. For example, the various functions may be affected by a programmed microprocessor. The control logic may be implemented using any of a number of known programming and processing techniques or strategies and is not limited to the order or sequence illustrated. For instance, interrupt or event-driven processing may be employed in real-time control applications rather than a purely sequential strategy as illustrated. Likewise, parallel processing, multitasking, or multi-threaded systems and methods may be used.

Control logic may be independent of the particular programming language, operating system, processor, or circuitry used to develop and/or implement the control logic illustrated. Likewise, depending upon the particular programming language and processing strategy, various functions may be performed in the sequence illustrated, at substantially the same time, or in a different sequence while accomplishing the method of control. The illustrated functions may be modified, or in some cases omitted, without departing from the spirit or scope of the present invention.

The method may be executed by the control system 18 and may be implemented as a closed loop control system. As such, the flowchart in Figure 2 may be representative of a single iteration and may be repeated to verify the balance or rebalance the shaft 20. The flowchart begins with the shaft 20 rotatably mounted to the dynamic balancer 12.

At block 100, the shaft 20 may be rotated about the axis of rotation 50 by the dynamic balancer 12. The shaft 20 may be rotated up to a predetermined rotational speed by the drive mechanism 36.

At block 102, upon achieving the predetermined rotational speed, the method may locate the imbalance location 52 of the shaft 20. For example, the drive mechanism 36 may rotate the shaft 20 up to a predetermined rotational speed. The control system 18 may receive a signal from the imbalance sensor 38 while the shaft 20 is rotating at the predetermined rotational speed. The control system 18 may use the signal from the imbalance sensor 38 to determine the location of the imbalance location 52. For instance, the control system 18 may determine a central principal axis 200 that may proximately intersect the axis of rotation 50 and the imbalance location 52. The control system 18 may also determine a correction mass amount based on the position of the imbalance location 52 and a relative positioning of the central principal axis 200 with respect to the axis of rotation 50.

At block 104, the method may determine or verify that an imbalance location was detected. An imbalance location 52 may be detected when the center of mass of the shaft 20 is not located along the axis 40 of the shaft 20 and/or the axis of rotation 50. If an imbalance location is not detected, then the method or iteration of the method may end at block 120. If an imbalance location is detected, then the method may continue at block 106.

At block 106, the dynamic balancer 12 may stop rotation of the shaft 20 about the axis of rotation 50 and hold the shaft 20 in a stationary position after locating the imbalance location 52. The shaft 20 may be stopped such that the imbalance location 52 may be located directly above the axis of rotation 50 to facilitate deposition of the powder composition 60 at the imbalance location 52.

At block 108, the powder metal deposition device 14 may be positioned above the imbalance location 52. For example, the powder metal deposition device 14 and/or the imbalance location 52 may both be positioned directly above the axis of rotation 50 depending on the desired configuration of the balance weight 62.

At block 110, the exterior surface 42 of the shaft 20 may be preheated proximate the imbalance location 52 before depositing the powder composition 60 onto the exterior surface 42 of the shaft 20. The exterior surface 42 of the shaft 20 may be heated by the heated compressed carrier gas 76 that may be provided by the powder metal deposition device 14. The heated compressed carrier gas 76 may be provided without the powder composition 60.

At block 112, the powder composition 60 may be deposited onto the exterior surface 42 of the shaft 20. For example, a valve associated with the container 70 may be opened to allow the powder composition 60 to enter the jet or stream of heater compressed carrier gas 76. The heated compressed carrier gas 76 may heat the powder composition 60 to a temperature less than a melting point of the powder composition 60 and to a temperature less than a melting point of the exterior surface 42 of the shaft 20. The powder composition 60 may be deposited onto the exterior surface 42 of the shaft 20 such that neither the powder composition 60 nor the shaft 20 melts when deposited. The balance weight 62 may be formed when a sufficient amount of powder composition 60 is deposited.

Referring to Figures 3 and 4, two examples of balance weights are shown. In Figures 3 and 4 the balance weights have a configuration in which the size or volume of the balance weight increases as the distance from the axis 40 increases.

In Figure 3, the balance weight 62 has a tapered conical shape that extends from the exterior surface 42 of the shaft 20. The balance weight 62 may extend along a balance weight axis 210. The balance weight axis 210 may intersect the axis 40 and may intersect the imbalance location 52. The balance weight 62 may be centered or may be symmetrical with the balance weight axis 210, or may be symmetrical in a radial direction with respect to the balance weight axis 210. For instance, the balance weight may have diameter or circumference with respect to the balance weight axis 210 that may increase at a substantially constant amount as the distance from the axis 40 and exterior surface 42 increases. The center of mass of the balance weight 62 may be disposed along the balance weight axis 210 in one or more embodiments. As such, the diameter of the balance weight 62 may be greatest at an end surface 212 of the balance weight 62.

Referring to Figure 4, another balance weight 62' is shown. The balance weight 62' may extend along the balance weight axis 210 and may have a first portion 220 that extends from the shaft 20 followed by a second portion 222 having a greater volume than the first portion 220 that may be located between the first portion 220 and the end surface 212. As such, the second portion 222 may be completely spaced apart from the shaft 20. In Figure 4, the first portion 220 may have a substantially cylindrical shape and the second portion 222 may have a tapered conical configuration, although other configurations such as spheres, spheroid, ellipsoid, paraboloid, hyperboloids, or pyramidal configuration.

The first portion 220 may be deposited with the powder metal deposition device 14 by positioning the powder metal deposition device 14 in a stationary position with respect to the shaft 20, such as by positioning the powder metal deposition device 14 directly above the axis of rotation 50 and the imbalance location 52. The shape of the nozzle 74 may result in the formation of the first portion 220. A balance weight or portion of a balance weight may not be symmetrical with respect to the balance weight axis 210 may be created by moving the powder metal deposition device 14 with respect to the shaft 20, such as by rotating the powder metal deposition device 14 about the balance weight axis 210 while the shaft 20 is held in a stationary position. For example the powder metal deposition device 14 may be moved along a predetermined path by the robotic manipulator 16 or manually by an operator. A greater volume of material may be deposited by increasing the flow rate of the powder composition 60, decreasing the feed rate of the powder metal deposition device 14, and/or by making repeated passes or revolutions about the balance weight axis 210.

The powder metal deposition device 14 may be manipulated to vary the shape of the balance weight 62. The different shapes of the balance weight 62 may vary the effective center of mass of the balance weight 62 that may reduce the total amount of weight added to the shaft 20 as compared to the discrete weights that may be welded to balance the shaft 20. The shapes may also be varied by altering the feed rate of the powder composition 60, varying the spray pattern, varying the deposition rate of the powder composition 60 onto the exterior surface 42 of the shaft 20, or revolving/rotating the powder metal deposition device 14 about the balance weight axis 210.

Returning to Figure 2, at block 114, the method may stop deposition of the powder composition 60 onto the exterior surface 42 of the shaft 20. For example, the flow of the powder composition 60 and/or compressed carrier gas 76 may be terminated or the powder metal deposition device 14 may be moved away from the shaft 20 to stop deposition.

At block 116, the method may check the balance of the shaft 20 to determine if the shaft 20 still has an imbalance. As such, block 116 may repeat blocks 100 and 102.

At block 118, the method may determine if the shaft 20 is balanced. This step may be similar or the same as block 104. The shaft 20 may be balanced if an amount of imbalance of the shaft 20 is within an imbalance tolerance. If the shaft 20 is balanced, then the method or iteration of the method may end at block 120. If the shaft 20 is not balanced, then the method may be repeated or return to block 100.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. A method of balancing a shaft for an axle assembly, the method comprising:
rotating the shaft about an axis;
locating an imbalance location of the shaft while the shaft is rotating;
stopping rotation of the shaft such that the imbalance location is located directly above the axis;
positioning a powder deposition device above the imbalance location; and
depositing a powder composition onto the shaft with the powder deposition device to produce a balance weight proximate the imbalance location such that the powder composition is propelled by a heated supersonic gas and the powder composition plastically deforms and mechanically attaches to the shaft.

2. The method of claim 1 further comprising:
stopping deposition of the powder composition;
rotating the shaft about the axis;
determining whether the shaft has an imbalance; and
repeating the locating, stopping, positioning, and depositing steps when the shaft has the imbalance.

3. The method of claim 1 further comprising preheating a surface of the shaft proximate the imbalance location before depositing the powder composition and the shaft is made of a first material and the powder composition is made of a second material that differs from the first material.

4. The method of claim 3 wherein the surface of the shaft is heated with the heated supersonic gas that is provided by the powder deposition device without the powder composition.

5. The method of claim 1 wherein the powder composition does not melt when deposited.

6. The method of claim 1 wherein the powder composition is heated by the heated supersonic gas to a temperature that is less than a melting point of the powder composition.

7. The method of claim 1 wherein the powder composition does not undergo a phase change when deposited onto the shaft and the shaft does not experience grain growth in response to deposition of the powder composition.

8. The method of claim 1 wherein the powder composition is deposited onto the shaft at an impact pressure of approximately 150-250 psi.

9. The method of claim 1 wherein a surface temperature of the shaft increases by no more than 200°C when the powder composition is deposited onto the shaft.

10. The method of claim 1 wherein the balance weight extends along a balance weight axis and the powder composition is deposited with the powder deposition device by moving the powder deposition device with respect to the balance weight axis and with respect to the shaft and wherein depositing the powder composition further comprises rotating the powder deposition device about the balance weight axis while the shaft is held in a stationary position when the powder composition is propelled by a heated supersonic gas against the shaft.

11. The method of claim 1 wherein the balance weight extends along a balance weight axis and the powder composition is deposited with the powder deposition device by moving the powder deposition device with respect to the balance weight axis and with respect to the shaft and wherein the balance weight has a tapered conical shape that extends further from the balance weight axis as a distance from the shaft increases.

12. The method of claim 1 wherein the balance weight includes a first generally cylindrical shape that extends from the shaft and a second generally non-cylindrical shape extending from the first generally cylindrical shape, wherein the second generally non-cylindrical shape has a mass and a volume greater than a mass and a volume of the first generally cylindrical shape, wherein the second generally non-cylindrical shape preferrably has a tapered truncated conical shape.

13. A shaft balancing system comprising:
a dynamic balancer that rotates a shaft about an axis and determines an imbalance location of the shaft; and
a powder deposition device that deposits a powder composition onto the shaft to produce a balance weight on the shaft proximate the imbalance location;
wherein the powder deposition device is located directly above the axis and the dynamic balancer holds the shaft in a stationary position when the powder composition is deposited.

14. The shaft balancing system of claim 13 wherein the balance weight extends along a balance weight axis and the powder composition is deposited onto the shaft by revolving the powder deposition device about the balance weight axis and with respect to the shaft.

15. The shaft balancing system of claim 13 wherein the powder composition is propelled by a heated supersonic gas and the powder composition plastically deforms and mechanically attaches to the shaft and the heated supersonic gas is heated to a temperature not to exceed 500°C.
